# EUROPEAN PATENT APPLICATION

(11) **EP 1 847 792 A1**
(43) Date of publication of application: **24.10.2007**
(21) Application number: 07007614.6
(22) Date of filing: 13.04.2007
(51) Int. Cl.: F28D 9/00, B23K 20/02, B23K 20/14

(54) **Method for manufacturing a heat exchanger**

(30) Priority: 20.04.2006 JP 2006116702
(71) Applicant: Xenesys Inc., Akashi-shi, Hyougo-ken (JP)
(72) Inventor: Matsuzaki, Toyoaki c/o Xenesys Inc., Akashi-shi, Hyougo-ken (JP); Watanabe, Tao c/o Xenesys Inc., Akashi-shi, Hyougo-ken (JP)
(74) Representative: Höhfeld, Jochen

(57) **Abstract**

Heat exchange plates (10) are stacked. The stacked plates are transported to a table (30). A pressing member (40) is placed on **an uppermost plate of the stacked plates (10) to apply a pressing** force to them. A shell (50) is placed to surround a space **encompassing the stacked plates (10) to isolate the plates from an outside. A gas is discharged from the space encompassing the** plates (10) to the outside through gas supply/discharge sections (32) provided on the table (30).

## Description

### BACKGROUND OF THE INVENTION

### Field of the Invention

The present invention relates a method for manufacturing a heat exchanger in which a plurality of heat exchange plates each made of a thin metallic plate are combined in parallel and integrally with each other, and especially to a method for manufacturing such a heat exchanger, which enables, prior to subjecting the heat exchange plates to a diffusion bonding process to form a united body, contact portions of the heat exchange plates as stacked to be kept in an appropriate contact state to ensure a subsequent bonding step in an appropriate manner.

### Description of the Related Art

If there is a demand that heat transfer coefficient is increased to enhance heat exchange efficiency, utilizing a heat exchanger by which transfer of heat (i.e., heat exchange) is made between a high temperature fluid and a low temperature fluid, a plate-type heat exchanger has conventionally been used widely. The plate-type heat exchanger has a structure in which a plurality of heat transfer plates are placed parallelly one upon another at prescribed intervals so as to form passages, which are separated by means of the respective heat transfer plates. A high temperature fluid and a low temperature fluid flow alternately in the above-mentioned passages to make heat exchange through the respective heat transfer plates.

In the conventional plate-type heat exchanger, gasket members formed of elastic material are placed between the adjacent two plates to make the distance between them constant and define passages for fluid. However, a high pressure of the heat exchange fluid flowing between the plates may cause deformation of the gasket member, thus disabling an appropriate separation of the fluids from being ensured or leading to an unfavorable variation in distance between the plates. In such a case, an effective heat exchange may not be carried out, thus causing a problem. In view of these facts, the conventional heat exchanger involves a problem that the heat exchange fluids can be utilized only in a pressure range in which the gasket member withstands.

There has recently been proposed a heat exchanger having a structure in which metallic thin plates, which are placed at predetermined intervals, are joined together, without using any gasket members, at their ends by welding to assemble the plates into a single unit so as to form passages for heat exchange fluids, on the opposite sides of the respective plates. Japanese Patent Provisional Publication No. 2003-194490 describes such a kind of a heat exchanger, as an example of an invention made by the present inventor.

In most cases of the conventional heat exchangers utilizing a bonding process such as a welding, the plates that are placed one upon another are combined through a welding applied only to a periphery of the plate, due to restriction of an operation such as welding. As a result, difference in pressure between heat exchange fluids flowing along the respective opposite surfaces of the plates becomes larger, the distance between the adjacent plates at a non-bonded portion such as a central portion may vary, not only deteriorating heat exchange performance, but also leading to damage of the heat exchanger. Therefore, such a heat exchanger may not be used under a relatively high pressure condition.

There have been proposed other types of heat exchangers utilizing diffusion bonding applied to all the contact portions of the assembled plates. Japanese Patent Publication No. S54-18232 and Japanese Patent Provisional Publication No. 2003-262489 disclose such heat exchangers.

The conventional heat exchangers have structures as described in the above-mentioned prior art documents. In the heat exchangers as described in Japanese Patent Publication No. S54-18232 and Japanese Patent Provisional Publication No. 2003-262489, the stacked plates are bonded at all the contact portions, thus providing a high strength by which deformation of the heat exchanger may not occur. However, in general, when carrying out the diffusion bonding process, not only heat, but also a high pressing force is applied to the stacked plates in a vacuum vessel to cause the diffusion bonding to progress. Accordingly, Japanese Patent Publication No. S54-18232 uses a combination of flat plates and corrugated plates having an optimized shape preventing deformation even when a pressure is applied. Japanese Patent Provisional Publication No. 2003-262489 uses plates having specific configurations, which are provided with partition wall sections and flow control sections that are obtained by subjecting the surface of the plate, serving as a heat transfer section, to an etching or a machining process, or fixing partition wall sections and flow control sections previously formed in separate parts on a flat plate. However, one of the contact surfaces of the plates always has a simple flat surface, with the result that it is possible to bring portions of the plates into contact with each other, thus providing a stable contact state in an easy manner.

However, in the plates of such plate-type heat exchangers, which include the heat exchanger described in Japanese Patent Provisional Publication No. 2003-194490, in which the plates that have a complicated pattern of irregularity formed by a press forming process come into contact with each other at projection portions thereof in a stacked state, it is difficult to maintain an accurate flatness in a general surface of the plates as press-formed. In addition, when a large pressing force is applied to the plate, the plate may easily be deformed. It is therefore difficult to bring the portions of the plates to be contacted, at the projection portions thereof, into a proper contact with each other, merely by placing the plates one upon another, thus causing problems.

Therefore, it is not possible to utilize, without any modification, the technical matters described in Japanese Patent Publication No. S54-18232 and Japanese Patent Provisional Publication No. 2003-262489, which permit to ensure easily a proper contact state of the portions of the plates each having the patterns of irregularity formed by the press-forming process on the opposite surfaces thereof, for the plate-type heat exchanger, to diffusion-bond them together into a united body.

### SUMMARY OF THE INVENTION

An object of the present invention, which was made to solve the above-mentioned problems, is therefore to provide a method for manufacturing a heat exchanger, which enables a plurality of heat exchange plates as press-formed to be held in a stacked and aligned state so as to bring the portions of the heat exchange plates to be contacted into an appropriate contact with each other, thus making it possible to diffusion-bond in a subsequent step into a united body.

In order to attain the aforementioned object, a method of the first aspect of the present invention for manufacturing a heat exchanger, comprises the steps of: placing a plurality of heat exchange plates one upon another, each of which is formed of a metallic plate member having a predetermined pattern of irregularity and combining the plates into a heat exchanger, in which each of the heat exchange plates is formed into a predetermined shape by a press-forming process so that each of the heat exchange plates includes on at least part thereof a heat transfer section having the pattern of irregularity and first and second opposite surfaces with which first and second heat exchange fluids come into contact, respectively, the heat exchange plates as combined come into contact with each other on a part of the heat transfer section and on at least one part of peripheries of the heat exchange plates, and gap portions through which heat exchange fluids are to pass are provided between the heat exchange plates, wherein, the method further comprises the steps of: placing a predetermined number of the heat exchange plates one upon another in an aligned state to prepare a set of stacked plates and transporting the set of stacked plates to a table by a transport unit to place same on a flat surface of the table; placing a pressing member having a flat portion on an upper end of the set of stacked plates so that the flat portion of the pressing member comes into contact with an uppermost plate of the set of stacked plates and applying a pressing force to the set of stacked plates in a stacking direction thereof; surrounding a space, which encompasses at least the set of stacked plates that is held between the pressing member and the table, with a shell to isolate the set of stacked plates from an outside; and providing gas supply/ discharge sections on the table in a vicinity of a position where the set of stacked plates is placed thereon, so that gas is discharged from the space encompassing the set of stacked plates as isolated, to the outside through the gas supply/ discharge sections.

According to the first aspect of the present invention, the plurality of heat exchange plates as press-formed are placed on the table in the stacked and aligned state, and a pressing force is applied to the set of stacked plates in the stacking direction in such a state. In addition, a space surrounding the plates is put in a condition where pressure is reduced in a vacuum or low-pressure state in which the diffusion bonding can be carried out. It is therefore possible to bring accurately the portions to be contacted of the stacked plates into a proper contact with each other. The stacked plates can appropriately be diffusion-bonded into a united body in the subsequent step in a state in which the portions to be contacted of the stacked plates are brought into contact with each other. It is therefore possible to manufacture the heat exchanger, which has many bonded points of the plates to enhance strength and pressure-resistant property, by utilizing the heat exchange plates as press-formed having a complicated configuration. Thus, performance of the heat exchanger can therefore be enhanced.

In the second aspect of the method of the present invention for manufacturing the heat exchanger, the shell may comprise a tubular member, which has a capacity of receiving the set of stacked plates therein and is flexibly deformable in an axial direction of the tubular body, the tubular member comprising a continuously extending body, which is provided at opposite ends thereof with openings, respectively, and has an air-tight property; and the step of surrounding the space comprises surrounding, after the step of placing the set of stacked plates on the table, the space, which encompasses the set of stacked plates, with the tubular member so that the axial direction thereof coincides with the stacking direction of the plates, and the opposite ends having the openings of the tubular member come into contact with the table and the pressing member, respectively; and the step may further comprises: putting contact portions of the opposite ends having the openings of the tubular member with the table and the pressing member, respectively, in an air-tightly contacting state; and discharging the gas from the space, which encompasses the set of stacked plates and is surrounded with the table, the pressing member and the tubular member, while keeping the pressing force applied to the set of stacked plates in the stacking direction thereof.

According to the second aspect of the present invention, the set of stacked heat exchange plates is put into the tubular shell and the air-tight property is maintained at connection portions between the opposite ends of the shell and the table and pressing member, respectively. In such a state, removal of gas from the space surrounding the plates puts the whole inner region defined by the shell into a vacuum or low-pressure state. The space surrounding the contact portions of the plates can surely be put into the vacuum or low-pressure state, along with a contractible deformation of the shell, to improve reliability in the diffusion bonding process, thus providing a sure bonding of the plates. In addition, it is possible to minimize the space, which surrounds the plates and is subjected to removal of air or pressure reduction, to reduce costs required for adjusting a surrounding atmosphere of the plates in a state in which the diffusion bonding process can be carried out. Further, the diffusion bonding process can easily be performed.

In the third aspect of the method of the present invention for manufacturing the heat exchanger, the method may further comprises the steps of: putting ends of cables, which are connected to terminals of a power supply for an electric current application-heat, respectively, into the space encompassing the set of stacked plates, while keeping an air-tight state in which the space is isolated from the outside; electrically connecting one of the cables, which is connected to one of the terminals of the power supply, to one of the set of the stacked plates in the stacking direction thereof and electrically connecting another of the cables, which is connected to another of the terminals of the power supply, to another one of the set of the stacked plates in the stacking direction thereof, so as to heat contact portions of all of the heat exchange plates through application of electric current.

According to the third aspect of the present invention, the power supply is connected to the set of stacked heat exchange plates through the cables. Application of an electric current to the heat exchange plates causes the temperature of the respective plates to directly increase by Joule heat of the plates themselves to reach a temperature at which the diffusion bonding occurs. There is no need to increase the temperature of the space surrounding the plates for the heating of the plates during the diffusion bonding process. It is therefore possible to carry out simply the diffusion bonding step, without providing any additional large-scaled facilities, thus controlling consumption of energy and reducing manufacturing costs of the heat exchanger.

In the fourth aspect of the method of the present invention for manufacturing the heat exchanger, the table and/or the pressing member may be put in a state in which a heat transmission is caused between the heat exchange plates and the table and/or pressing member, the table and/or the pressing member having a hollow portion, which is connected to fluid conduits for supplying a cooling fluid into the hollow portion and discharging same therefrom, to cause the cooling fluid to flow in the hollow portion, thereby cooling the heat exchange plates and the table and/or pressing member.

According to the fourth aspect of the present invention, the table and/or the pressing member that are placed on the outer sides of the set of stacked heat exchange plates has the hollow portion through which the cooling fluid flows. Causing the cooling fluid to flow in the hollow portion during the diffusion bonding process or after completion thereof permits to cool not only the table and/or the pressing member, but also the heat exchange plates, which have a heat transmission property, in an active manner. It is therefore possible to prevent abnormal increase in temperature of the table and/or the pressing member during the diffusion bonding process. In addition, it is possible to decrease a period of time when the plates as diffusion-bonded are kept in a high temperature condition, which may easily cause variation in characteristic properties of the plates, to prevent unfavorable variation in characteristic properties of the plates. Thus, the diffusion bonding process can safely be carried out and performance and reliability of the heat exchanger as manufactured can be improved.

### BRIEF DESCRIPTION OF THE DRAWINGS

FIG. 1 is a schematic structural view illustrating a state in which a pressing force is applied to a set of stacked heat exchange plates prior to a diffusion bonding process in a heat exchanger manufacturing method according to an embodiment of the present invention;
FIGS. 2(A) and 2(B) are descriptive views illustrating a stacking state of heat exchange plates in the heat exchanger manufacturing method according to the embodiment of the present invention;
FIG. 3 is a descriptive view illustrating a step for placing the set of stacked heat exchange plates on a table in accordance with the heat exchanger manufacturing method according to the embodiment of the present invention;
FIG. 4 is a descriptive perspective view illustrating a state in which the set of stacked heat exchange plates is p laced on the table in accordance with the heat exchanger manufacturing method according to the embodiment of the present invention; and
FIG. 5 is a descriptive perspective view illustrating a state in which a shell and a pressing member are placed on the table in the heat exchanger manufacturing method according to the embodiment of the present invention.

### DETAILED DESCRIPTION OF THE PREFERRED EMBODIMENTS

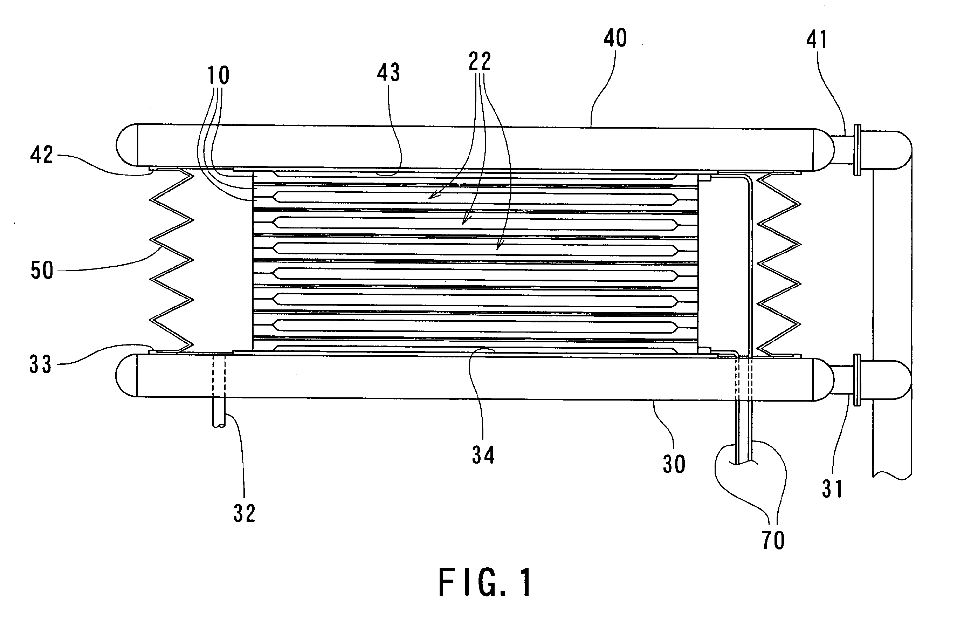

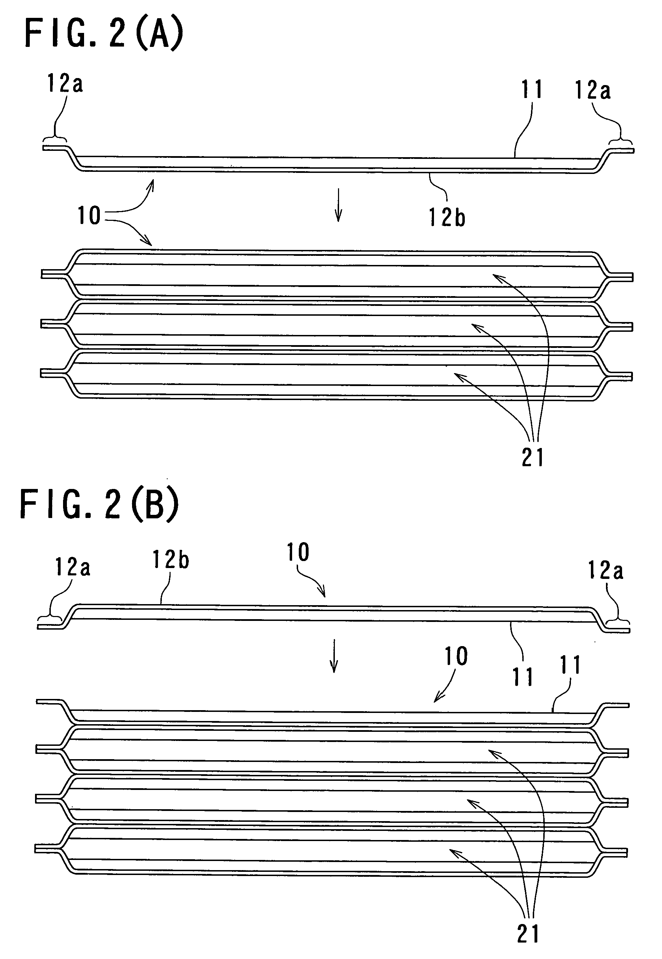

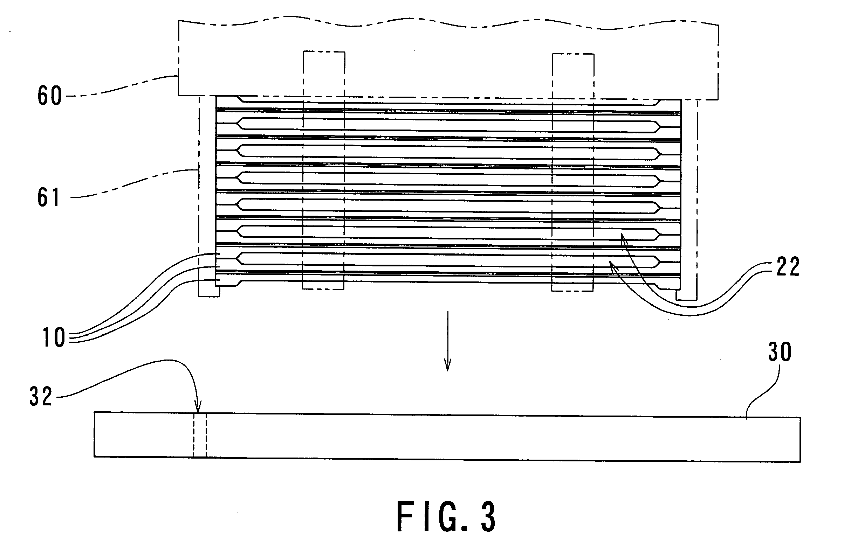

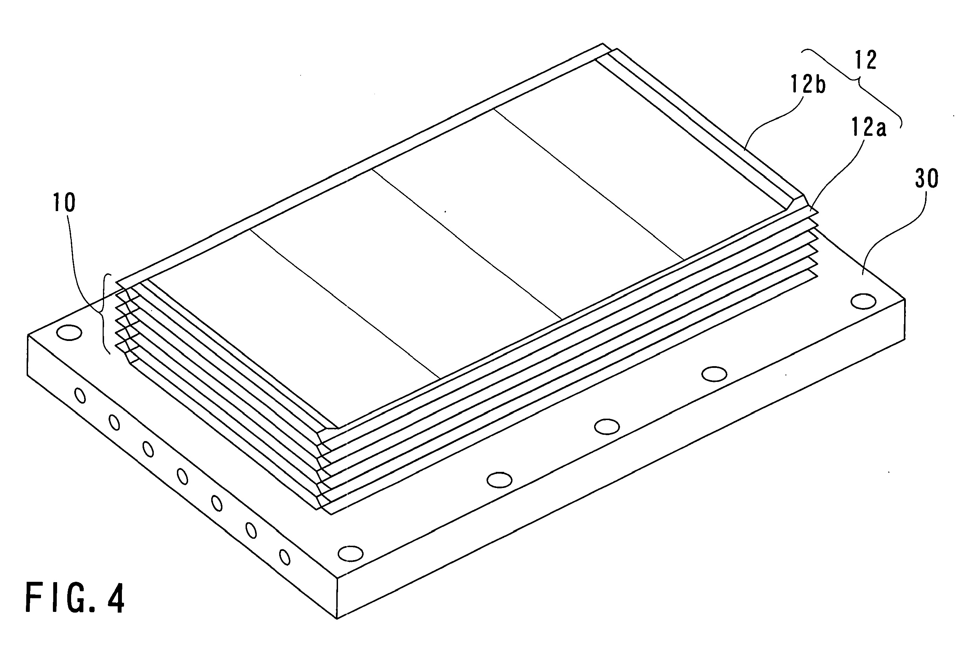

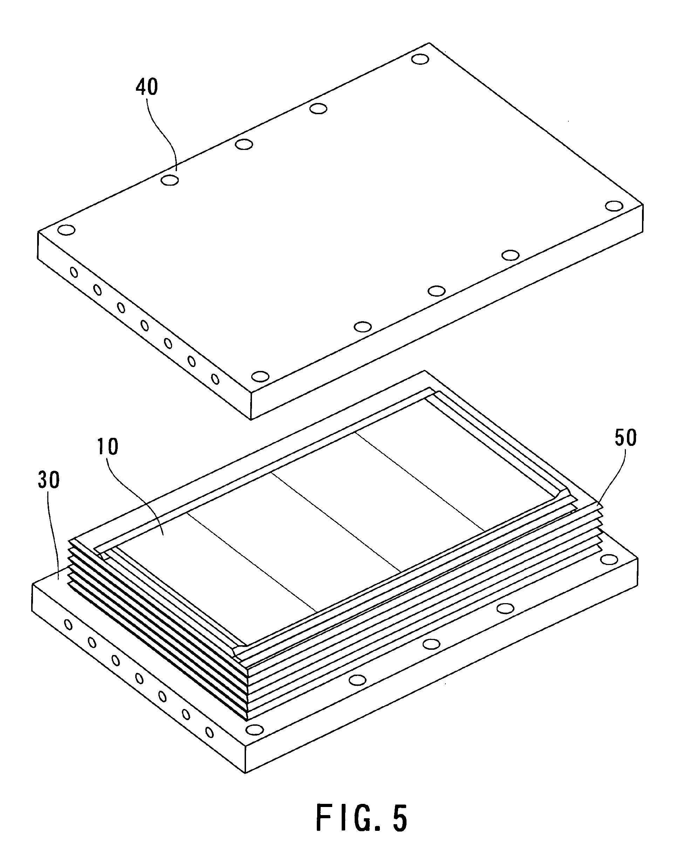

Now, the embodiment of the present invention will be described in detail below with reference to FIGS. 1 to 5. FIG. 1 is a schematic structural view illustrating a state in which a pressing force is applied to a set of stacked heat exchange plates prior to a diffusion bonding process in a heat exchanger manufacturing method according to an embodiment of the present invention, FIGS. 2(A) and 2(B) are descriptive views illustrating a stacking state of heat exchange plates in the heat exchanger manufacturing method according to the embodiment of the present invention, FIG. 3 is a descriptive view illustrating a step for placing the set of stacked heat exchange plates on a table in accordance with the heat exchanger manufacturing method according to the embodiment of the present invention, FIG. 4 is a descriptive perspective view illustrating a state in which the set of stacked heat exchange plates is p laced on the table in accordance with the heat exchanger manufacturing method according to the embodiment of the present invention, and FIG. 5 is a descriptive perspective view illustrating a state in which a shell and a pressing member are placed on the table in the heat exchanger manufacturing method according to the embodiment of the present invention.

As shown in the above-mentioned figures, the method according to the embodiment of the present invention for manufacturing a heat exchanger comprises placing a plurality of heat exchange plates 10, which are formed of a metallic plate member having a rectangular shape, one upon another to prepare a set of stacked plates 10, placing the set of stacked plates on a table 30, while restraining the plates from moving in the other direction than the stacking direction of the plates with the use of a transport unit 60, placing a pressing plate 40 serving as a pressing member on the uppermost plate of the set of stacked plates 10 and disposing a shell so as to surround the stacked plates 10, providing a bonding space around the stacked plates 10 so as to be separated from an open air, thus enabling the heat exchange plates 10 to be subjected to a subsequent step of diffusion bonding.

The heat exchange plate 10 has a structure in which a heat transfer section 11 having a pattern of irregularity is formed on the central portion of a rectangular metallic thin sheet and flanges 12 are formed in the periphery of the plate so as to surround the heat transfer section 11, utilizing a prescribed press-forming device (not shown).

The heat transfer section 11 is a region, which has the optimized pattern of irregularities, so that a high temperature heat exchange fluid (i.e., the first heat exchange fluid) is to come into contact with one surface of the heat transfer section 11 and a low temperature heat exchange fluid (i.e., the second heat exchange fluid) is to come into contact with the other surface thereof, in order to make heat exchange, and more specifically has a plurality of projections that are placed in a predetermined arrangement on a surface of the metallic plate and a plurality of recesses each of which is placed between the projections on the surface of the metallic plate so as to dent in an opposite direction to a protruding direction of the projections.

The pattern of irregularity of the heat transfer section 11 is symmetric in a positional relationship between the projections and the recesses with respect to the center of the vertical direction (i.e., the longitudinal direction) of the plate. When the heat exchange plate 10 is placed on the other heat exchange plate having the same configuration so that the inner surfaces of them face each other and the latter is positioned upside down, the projections and recesses of the former coincide with those of the latter, respectively, and the projections of the central pattern portion and the projections of the boundary pattern portion of the one heat transfer member come into close contact with those of the other heat transfer member, respectively. The pattern of irregularities has a known wave-shaped cross section, which provides an excellent heat transfer property and groove portions through which condensed water can be discharged rapidly. The above-mentioned wave-shaped cross section and the groove portions are known and description of them will be omitted.

The flange 12 is composed of flat portions 12a, which are disposed continuously along two sides of the periphery of a rectangular shape and bulge portions 12b continuously extending from the heat transfer section 11 along the other two sides. When the plates are placed in parallel one upon another, the adjacent two plates come into contact with each other at their flat portions and bulge portions and first gap portions 21 through which the first heat exchange fluid is to pass and second gap portions 22 through which the second heat exchange fluid is to pass being provided alternately between adjacent two heat transfer sections 11. In such a state, the non-contact portions of these two plates define openings, which communicate with gap portions 21, 22 formed between the plates. The positions of the openings may be optionally set by changing the positional relationship between the flat portions 12a and the projections 12b of the flange 12. After joining the plates at the flanges 12, the first and second gap portions 21, 22 are completely separated from each other in a water-tight manner except for the first and second openings.

The above-mentioned table 30 is provided in the form of a thick plate body having a hollow portion therein through which cooling water serving as a cooling medium flows. The table has such a sufficient rigidity that it is not deformed substantially even in a temperature at which the diffusion bonding is carried out for bonding the heat exchange plates 10, and an amount of deformation is negligibly small. The table serves also as a base plate, which support the stacked heat exchange plates 10 from the lower side without deformation of the plates.

The table 30 is connected to tubular fluid conduits 31 thorough which the cooling water is supplied and discharged. An insulating sheet 34 is placed between the table 30 and the stacked heat exchange plates 10 so as to cause heat transmission between them. The cooling water, which serves as cooling medium to cool the plates, which are heated during the diffusion bonding process, is supplied into the table 30.

The table 30 is provided in the vicinity of the heat exchange plates 10 stacked thereon with gas supply and discharge sections 32 through which gas is supplied into the space, which encompasses the heat exchange plates 10 and separated from an open air, and discharged therefrom. In addition, cables 70 for an electric current application-heat, which are electrically connected to corresponding parts of the heat exchange plates 10, pass through the table 30 and are pulled out, with an air tight state kept. The table 30 may have holes, which have previously been formed on an outer side of a position where the shell 50 is placed, to receiving bolts for holding the pressing plate 40.

The pressing plate 40 is provided in the form of a thick plate body having a hollow portion therein through which cooling water serving as a cooling medium flows. The pressing plate has such a sufficient strength that it is not deformed substantially even in a temperature at which the diffusion bonding is carried out for bonding the heat exchange plates 10. An insulating sheet 43 is placed between the pressing plate 40 and the stacked heat exchange plates 10 so as to cause heat transmission between them. A pressing force is applied to the stacked heat exchange plates 10 with the use of the pressing plate 40. The pressing plate 40 is connected, in the same manner as the above-described table 30, to tubular fluid conduits 41 thorough which the cooling water is supplied and discharged. The cooling water, which serves as cooling medium to cool the heat exchange plates 10, which are heated during the diffusion bonding process, is supplied into the pressing plate 40.

The shell 50 is a thin metallic bellows, which has a capacity of receiving the stacked heat exchange plates therein and is flexibly deformable in the axial direction thereof. The shell 50 is placed on the table 30 so as to surround the plates so that the axial direction the shell 50 coincides with the stacking direction of the plates. The space encompassing the stacked heat exchange plate 10 is separated from the open air in this manner. The opposite ends having the openings of the shell 50 are connected to the table 30 and the pressing plate 40 through gasket 33, 42, respectively, to maintaining the air tightly contacting state.

The transport unit 60 is a known mechanism that holds the set of stacked heat exchange plates 10 in the lump and transports them from a place at which the previous step has been carried out to a predetermined setting position on the table 30. The transport unit 60 has a plurality of columnar guide members 61, which extend toward the upper surface of the table 30 to restrict the heat exchange plates from moving in the horizontal direction.

Each of the heat exchange plates 10 has grooves or holes, which are previously formed at the edges of the heat exchange plate. The above-mentioned guide member 61 is put into the above-mentioned grooves or holes of the stacked heat exchange plates 10 to restrict these plates from moving in the perpendicular direction to the stacking direction of the plates (i.e., the horizontal direction), thus enabling the plates to be placed on the table in an aligned state. The guide members 61 are removed from the heat exchange plates 10 so as to be away therefrom after the stacked heat exchange plates 10 are placed on the table, thus preventing the guide members 61 from coming into contact with the stacked heat exchange plates 10 to move them erroneously.

Now, description will be given of preparatory steps for diffusion bonding in the heat exchanger manufacturing method according to the embodiment of the present invention. A sheet of metallic thin sheet material is subjected to a press forming process with the use of a press forming device to prepare a heat exchange plate 10. The thus prepared heat exchange plate 10 is conveyed from the press forming device to a predetermined stocking position to be stocked. The other heat exchange plate 10 is prepared in the same manner, conveyed and placed on the previously stocked plate so that these plates come into contact with each other on the same surface side and the other heat exchange plate 10 is turned upside down. The newly prepared heat exchange plate is placed on the heat exchange plate just previously stocked so that these plates always come into contact with each other on the same surface side and the other heat exchange plate 10 is turned upside down. As a result, alternate heat exchange plates have the same orientation. These stacking steps are repeated to prepare a predetermined number of the stacked heat exchange plates. The predetermined number of the heat exchange plates are transported in the stacked state toward the table 30 by the transport unit.

When the heat exchange plates 10 as conveyed are moved to a predetermined position above the table 30 by the transport unit 60, these plates gradually moved down to an operation position on the table 30. There are previously provided on the table 30 the gasket 33 for maintaining the air tightly contacting state between the table 30 and the shell 50 as well as the insulating sheet 34 for maintaining an electrically insulating state between the heat exchange plate 10 and the table 30.

At this stage, the guide members 61, which are provided on the transport unit 60 so as to extend downwardly in the vertical direction, are put into the grooves or holes of the heat exchange plates 10. As a result, the heat exchange plates 10 come into contact with the guide members 61 to prevent these plates from moving in the horizontal an improper direction, during transporting the heat exchange plates 10 on the table 30. Therefore, the plates are placed in a proper position in an appropriately stacked state, thus ensuring a state in which the plates are aligned properly and these plates come into contact with each other at the portions thereof to be connected.

When the heat exchange plates 10 are placed on the table 30, the operation of holding the plates by the transport unit 60 is released, with the result that the heat exchange plates 10 stand still on the table 30. Then, the guide members 61, which maintains the stacked plates in the aligned state, are removed from the grooves or holes of the heat exchange plates 10 and then moved to a position where these members 61 do not come into contact with the heat exchange plates 10. The transport unit 60 is moved away from the plates as placed on the table and returned to the original stoking position for new plates so as to convey the new heat exchange plates 10. A series of the above-mentioned steps is repeated.

The heat exchange plates 10, which are stacked on the table 30, come into contact with each other, not only at the flanges of the edges of these plates, but also at the projections, which project toward the opposing heat transfer sections 11. The heat exchange plates 10 are spaced from each other by a predetermined distance at the other portions than the above-mentioned contact portions to provide a gap between the adjacent heat exchange plates 10.

Then, the shell 50, which is flexible deformable in the stacking direction of the plats, is placed so as to surround the heat exchange plates 10 on the table 30. The shell 50 is closely contacted at the edge thereof, which defines the opening, to the gasket 33 on the table 30, thus keeping the table-side connection portion in an air-tightly connecting state.

In addition, the pressing plate 40 is placed on the upper most plate of the stacked heat exchange plates 10 so as to come into contact with the upper edge of the shell 50, which defines the opening. The gasket 42 disposed on the side of the pressing plate 40 is closely contacted to the upper edge of the shell 50, thus keeping the pressing plate-side connection portion also in an air-tightly connecting state. The pressing plate 40 is placed in this manner to apply a pressing force to the heat exchange plates 10. In such a state, the parallelism of the plates is maintained and the contacting portions of the plates are held stationarily without variation in a contact positional relationship between the plates. The shell 50 is flexibly deformed by the pressing force, while maintaining the air-tightly connecting state, thus ensuring a state in which the space around the stacked plates is separated from an open air. Reliability of the diffusion bonding is therefore improved. The insulating sheet 43 is placed between the pressing plate 40 and the uppermost one of the heat exchange plates 10 to provide an electrically insulating state between them, in the same manner as that provided on the table 30.

The pressing force applied by the pressing plate 40 is set as a smaller pressure to an extent that plastic deformation does not occur even when the temperature of the heat exchange plate 10, which has once been subjected to the press formation process, increases to a predetermined temperature at which diffusion bonding peculiar to the material of the plate occurs. Accordingly, the diffusion bonding causes no damage to the press-formed shape of the heat exchange plate 10.

The conduits 31, 41 having a tubular shape are connected to the table 30 and the pressing plate 40, respectively, so that the cooling water flows therein. The lowermost and uppermost plates of the stacked heat exchange plates 10 are connected to respective terminals of an electric power supply (not shown) through the cables 70 so that an electric current can be applied to the heat exchange plates 10 through their contacting portions. The preparatory steps for diffusion bonding are completed in this manner.

The heat exchange plates 10 to which the above-mentioned associated members and attachments are connected, are bonded at their contacting portions through the diffusion bonding performed in the subsequent step to provide a major part of a heat exchanger. In the diffusion bonding step, the space, which encompasses the plates and is separated from an open air, except for the gas supply and discharge sections 32, is kept in a vacuum state in which air is removed from the space, or a low pressure state in which an inert gas such as argon gas is supplied into the space by carrying out a pressure reducing operation to substitute the inert gas for the air. Then, the gas supply and discharge sections 32 is closed to keep the above-mentioned space in the vacuum state or the low pressure state.

When an electric current is applied to the stacked plates through the cables 70, Joule heat is generated directly from the plates themselves to provide an electric current application-heating state in which the plates are heated. The temperature of the contact areas of the plates is increased to reach the predetermined temperature at which the diffusion bonding occurs. The plates, which come into contact with each other under a predetermined pressure, are kept at the above-mentioned temperature for a predetermined period of time, to diffusion-bond the contact areas of the plates into a united body.

The method of the present invention includes to supply the cooling water into the table 30 and the pressing plate 40 between which the stacked heat exchange plates 10 is held. It is therefore possible to supply the cooling water into the table 30 and the pressing plate 40, which are heated by applying an electric current to the heat exchange plates 10 to heat them, to cool the table 30 and the pressing plate 40, thus permitting to prevent the table 30 and the pressing plate 40 from being overheated. Therefore, adverse influence of overheating on the diffusion bonding can be avoided. Alternatively, it is also possible to supply, after completion of the diffusion bonding of the heat exchange plates 10 and halt of heating by application of electric current, the cooling water into the table 30 and the pressing plate 40, while maintaining the vacuum state or the low pressure state in which only an inner gas atmosphere exists, to cool the heat exchange plates 10 bonded together from the sides of the table 30 and the pressing plate 40 through the insulating sheets 34, 43, thus decreasing the temperature of the plates. In this case, it is possible to decrease a period of time when the plates as diffusion-bonded are kept in a high temperature condition, which may easily cause variation in characteristic properties of the plates, to prevent unfavorable variation in characteristic properties of the plates. Therefore, the heat exchanger having no defects and a stable performance can be obtained.

According to the heat exchanger manufacturing method according to the embodiment of the present invention, the plurality of heat exchange plates 10 as press-formed are placed on the table 30 in the stacked and aligned state, and a pressing force is applied to the set of stacked plates in the stacking direction in such a state. In addition, a space surrounding the plates is put in a condition where pressure is reduced in a vacuum or low-pressure state in which the diffusion bonding can be carried out. It is therefore possible to bring accurately the portions to be contacted of the stacked plates into a proper contact with each other. The stacked plates can appropriately be diffusion-bonded into a united body in the subsequent step in a state in which the portions to be contacted of the stacked plates are brought into contact with each other. It is therefore possible to manufacture the heat exchanger, which has many bonded points of the plates to enhance strength and pressure-resistant property, by utilizing the heat exchange plates 10 as press-formed having a complicated configuration. Thus, performance of the heat exchanger can therefore be enhanced.

In the above-described embodiment of the present invention for manufacturing the heat exchanger, the table 30 on which the heat exchange plates 10 are to be placed has a single plate having an flat upper surface. However, the present invention is not limited only to such an embodiment. When it is necessary to increase an area of the upper surface of the table based on a large size of the heat exchange plates 10, a plurality of table plates may be joined together to provide a single flat surface so that the upper surfaces of the table plates are flush with a horizontal plane. In this case, it is preferable to place a sealing sheet, which is formed of a metallic thin material and has a larger size than the space that encompasses the plates and is defined by the shell 50, on the set of joined table plates, form gas supply and discharge sections 32 in the set of joined table plates so as to pass through it, weld the sealing sheet and portions of the set of joined table plates that define the gas supply and discharge sections 32, in order to maintain surely an air-tight condition, and then place the stacked heat exchange plates 10 and the shell 50 on the sealing sheet.

In the above-described embodiment of the present invention for manufacturing the heat exchanger, the cables 70 are connected to the lowermost and uppermost plates of the stacked heat exchange plates 10, respectively, so as to be able to apply an electric current to all the heat exchange plates 10 to heat them, and the insulating sheet 34 is placed between the table 30 and the lowermost plate of the stacked heat exchange plates 10 and the other insulating sheet 43 is placed between the pressing plate 40 and the uppermost plate of the stacked heat exchange plates 10 so as to surely maintain an electrically insulating state. In case where the shell 50 is formed of metallic material, an insulating sheet may be disposed between the heat exchange plates 10 and the shell 50. In addition, in case where the table 30 and the pressing plate 40 are made of metallic material, it is possible to connect the cables to the table 30 and the pressing plate 40, without directly connecting the cables to the heat exchange plates 10, so as to provide an electrically connecting state between the heat exchange plates 10 and each of the table 30 and the pressing plate 40 to apply an electric current to the heat exchange plates 10 to heat them. In this case, the table 30 and the pressing plate 40 directly come into contact with the heat exchange plates 10, without placing any insulating sheet between the lowermost plate of the heat exchange plates 10 and the table 30 and between the uppermost plate thereof and the pressing plate 40. The table 30 and the pressing plate 40 are preferably formed of material, which does not diffusion-bond to the heat exchange plates 10 under the diffusion bonding conditions.

## Claims

1. A method for manufacturing a heat exchanger comprising the steps of: placing a plurality of heat exchange plates (10) one upon another, each of which is formed of a metallic plate member having a predetermined pattern of irregularity and combining the plates into a heat exchanger, in which each of the heat exchange plates (10) is formed into a predetermined shape by a press-forming process so that each of the heat exchange plates (10) includes on at least part thereof a heat transfer section (11) having the pattern of irregularity and first and second opposite surfaces with which first and second heat exchange fluids come into contact, respectively, the heat exchange plates as combined come into contact with each other on a part of the heat transfer section and on at least one part of peripheries of the heat exchange plates, and gap portions (21,22) through which heat exchange fluids are to pass are provided between the heat exchange plates, wherein, the method further comprising the steps of:
placing a predetermined number of the heat exchange plates (10) one upon another in an aligned state to prepare a set of stacked plates and transporting the set of stacked plates to a table (30) by a transport unit to place same on a flat surface of the table (30);
placing a pressing member (40) having a flat portion on an upper end of the set of stacked plates (10) so that the flat portion of the pressing member comes into contact with an uppermost plate of the set of stacked plates and applying a pressing force to the set of stacked plates in a stacking direction thereof;
surrounding a space, which encompasses at least the set of stacked plates (10) that is held between the pressing member (40) and the table (30), with a shell (50) to isolate the set of stacked plates (10) from an outside; and
providing gas supply/discharge sections (32) on said table (30) in a vicinity of a position where the set of stacked plates is placed thereon, so that gas is discharged from the space encompassing the set of stacked plates as isolated, to the outside through the gas supply/discharge sections (32).

2. The method as claimed in Claim 1, wherein:
said shell (50) comprises a tubular member, which has a capacity of receiving the set of stacked plates (10) therein and is flexibly deformable in an axial direction of the tubular body, said tubular member comprising a continuously extending body, which is provided at opposite ends thereof with openings, respectively, and has an air-tight property; and
the step of surrounding said space comprises surrounding, after the step of placing the set of stacked plates (10) on the table (30), said space, which encompasses the set of stacked plates (10), with said tubular member so that the axial direction thereof coincides with the stacking direction of the plates, and the opposite ends having the openings of the tubular member come into contact with the table (30) and the pressing member (40), respectively; and
the step further comprising:
putting contact portions of the opposite ends having the openings of the tubular member with the table (30) and the pressing member (40), respectively, in an air-tightly contacting state; and
discharging the gas from the space, which encompasses the set of stacked plates (10) and is surrounded with said table (30), said pressing member (40) and the tubular member, while keeping the pressing force applied to the set of stacked plates (10) in the stacking direction thereof.

3. The method as claimed in Claim 1 or 2, further comprising the steps of:
putting ends of cables (70), which are connected to terminals of a power supply for an electric current application-heat, respectively, into said space encompassing the set of stacked plates (10), while keeping an air-tight state in which the space is isolated from the outside;
electrically connecting one of the cables (70), which is connected to one of the terminals of said power supply, to one of the set of the stacked plates (10) in the stacking direction thereof and electrically connecting another of the cables (70), which is connected to another of the terminals of said power supply, to another one of the set of the stacked plates (10) in the stacking direction thereof, so as to heat contact portions of all of the heat exchange plates (10) through application of electric current.

4. The method as claimed in any one of Claims 1 to 3, wherein:
said table (30) and/or said pressing member (40) is put in a state in which a heat transmission is caused between the heat exchange plates (10) and the table (30) and/or pressing member (40), said table (30) and/or said pressing member (40) having a hollow portion, which is connected to fluid conduits (31,41) for supplying a cooling fluid into the hollow portion and discharging same therefrom, to cause the cooling fluid to flow in the hollow portion, thereby cooling the heat exchange plates (10) and the table (30) and/or pressing member (40).
